# EUROPÄISCHE PATENTSCHRIFT

(11) **EP 1 979 603 B1**
(45) Veröffentlichungstag und Bekanntmachung des Hinweises auf die Patenterteilung: **26.03.2014**
(21) Anmeldenummer: 07711337.1
(22) Anmeldetag: 11.01.2007
(51) Int. Cl.: F02M 25/07

(54) **VORRICHTUNG ZUR ABGASKÜHLUNG**
DEVICE FOR COOLING WASTE GAS
DISPOSITIF DE REFROIDISSEMENT DE GAZ D'ÉCHAPPEMENT

(30) Priorität: 19.01.2006 DE 102006002856; 15.11.2006 DE 102006054222
(43) Veröffentlichungstag der Anmeldung: 15.10.2008
(73) Patentinhaber: Behr GmbH & Co. KG, 70469 Stuttgart (DE)
(72) Erfinder: EMRICH, Karsten, 70195 Stuttgart (DE); RÖSCHMANN, Timm, 70182 Stuttgart (DE); MITCHELL, Thomas, 71069 Sindelfingen (DE)
(74) Vertreter: Grauel, Andreas
(86) Internationale Anmeldenummer: PCT/EP2007/000213
(87) Internationale Veröffentlichungsnummer: WO 2007/082676

(56) Entgegenhaltungen:
- EP-A- 1 355 058
- WO-A-03/025380
- WO-A-2007/060172
- FR-A- 2 875 857
- JP-A- 2001 027 157

## Beschreibung

Die Erfindung betrifft eine Vorrichtung zur Abgaskühlung nach dem Oberbegriff des Anspruchs 1.

Insbesondere aus dem Bau von Kraftfahrzeugen sind Wärmetauscher bekannt, die einer Kühlung von Abgasen eines Verbrennungsmotors dienen. Unter diesen Wärmetauschern sind Bauformen bekannt, die zum einen als "I-Flow"-Anordnungen und zum anderen als "U-Flow"-Anordnungen bezeichnet werden. Im ersten Fall handelt es sich um Wärmetauscher, bei denen die Einlass- und Auslassverbindungen für das Abgas an entgegengesetzten Seiten eines länglichen Gehäuses angeordnet sind, wobei das Abgas den Wärmetauscherbereich nur einmal in einer Längsrichtung durchströmt. Bei der letztgenannten Anordnung durchströmt das Abgas den Wärmetauscher in einer Hin- und einer Rückrichtung, also U-förmig, so dass regelmäßig der Einlass- und Auslassbereich auf der gleichen Seite eines Tauschergehäuses angeordnet sind. Ein Beispiel eines solches Wärmetauschers ist in EP-1355058 gezeigt.

Es ist die Aufgabe der Erfindung, einen Wärmetauscher anzugeben, bei dem bei guter Flexibilität hinsichtlich seiner Einbaulage eine gute Kühlleistung bei gegebenem Bauraum erzielt ist

Diese Aufgabe wird für einen eingangs genannten Wärmetauscher erfindungsgemäß mit den kennzeichnenden Merkmalen des Anspruchs 1 gelöst. Hierdurch wird bei einem gegebenem Bauraum ein längerer Strömungspfad des Abgasstroms entlang der Tauschermittel sichergestellt, wodurch eine hohe Kühlleistung erzielbar ist.

In vorteilhafter Ausgestaltung ist die Vorrichtung ein Abgaskühler für einen Verbrennungsmotor eines Kraftfahrzeugs. Insbesondere in Kombination mit den häufig in engem Rahmen vorgegebenen Bauräumen im Falle von Kraftfahrzeugmotoren ist die erfindungsgemäße Vorrichtung vorteilhaft einsetzbar. Dies gilt vor allem bei vorgegebenen Positionen der Anschlüsse der Abgasleitungen.

Bei einem bevorzugten Ausführungsbeispiel umfassen die Tauschermittel eine Mehrzahl von sich in der Längsrichtung erstreckenden Rohren zur Abgasführung, die in dem Gehäuse angeordnet sind. Weiterhin vorteilhaft weist das Gehäuse Anschlüsse zur Durchströmung mit einem flüssigen Kühlmittel auf. Insgesamt ist hierdurch ein effektiver, bauraumoptimierter Abgas-Wärmetauscher mit Flüssigkeitskühlung in Rohrbündel-Bauweise ausgebildet. Alternativ hierzu kann die erfindungsgemäße Vorrichtung jedoch auch ein luftgekühlter Abgaskühler sein.

Weiterhin vorteilhaft können die Rohre in ihren Endbereichen jeweils in gemeinsamen Kopfstücken festgelegt sein. Hierdurch ist ein Abgaskühler auf einfache Weise herstellbar.

Bevorzugt ist eine erste Gruppe der Rohre dem ersten Strömungspfad zugeordnet und eine zweite Gruppe der Rohre dem zweiten Strömungspfad zugeordnet, wodurch ein verlängerter Gesamtströmungsweg des Abgasstroms auf einfache Weise realisiert ist.

In besonders vorteilhafter Weiterbildung ist ein Abgaskanal vorgesehen, der in Längsrichtung und im Wesentlichen parallel zu den Rohren angeordnet ist. Dabei kann es sich um einen einzelnen Kanal mit einem zur widerstandsarmen Führung des gesamten Abgasstroms geeignetem Querschnitt handeln oder auch um einen unterteilten Kanal oder um ein Bündel aus separaten Rohren. Vorteilhaft ist der Abgaskanal unmittelbar mit dem Einlassbereich verbunden. Besonders bevorzugt weist dabei die Vorrichtung ein erstes Umlenkmittel zur Umlenkung des Abgasstroms von dem Abgaskanal in den ersten Strömungspfad auf. Weiterhin vorteilhaft hat die Vorrichtung ein zweites Umlenkmittel zur Umlenkung des Abgasstroms von dem ersten Strömungspfad in den zweiten Strömungspfad. Insgesamt ist hierdurch auf einfache Weise ein kompakter Wärmetauscher ausgebildet, bei der der Abgasstrom über zwei Umlenkungen zunächst vom Einlassbereich in Richtung Auslassbereich, dann in Gegenrichtung und dann wieder in Richtung Auslassbereich geführt ist. Die Tauschermittel zur Kühlung des Abgasstroms sind dabei im Bereich des ersten und des zweiten Strömungspfades angeordnet, wobei der Abgaskanal nicht notwendig einer Wärmetauschung dient. Zur einfachen Realisierung kann insbesondere das zweite Umlenkmittel bevorzugt als ein gebogenes Blechteil ausgebildet.sein.

Allgemein bevorzugt umfasst die Vorrichtung eine Stellvorrichtung zur selektiven Führung des Abgasstroms. Hierdurch ist eine erhöhte Flexibilität bei der Abgasführung gewährleistet. Insbesondere, bevorzugt leitet die Stellvorrichtung in einer ersten Endstellung den Abgasstrom In den ersten Strömungspfad und in einer zweiten Endstellung in den Auslassbereich. Hierdurch kann durch die Stellvorrichtung selektiert werden, ob der Abgasstrom den kühlenden Tauscherbereich durchläuft oder nicht. In letzterem Fall kann der eine Abgaskanal insbesondere die Funktion einer Bypassleitung aufweisen, wobei er bei der ersten Endstellung der Stellvorrichtung die Funktion einer Zuleitung zu den Tauschermitteln hat. Hierzu ist bevorzugt vorgesehen, dass der Abgasstrom in der zweiten Endstellung nicht durch die Tauschermittel geführt ist, so dass eine Kühlung des Abgasstroms in der zweiten Endstellung im Wesentlichen vermieden ist.

In besonders einfacher und bevorzugter Ausführung umfasst die Stellvorrichtung eine um eine Achse drehbare Klappe. Zur Erlangung einer besonders kleinen Bauweise ist bevorzugt vorgesehen, dass ein maximaler Drehwinkel der Klappe nicht mehr als 40 Grad, insbesondere nicht mehr als etwa 30 Grad beträgt. Durch diesen relativ kleinen Stellwinkel kann eine Antriebseinheit für die Klappe kostengünstig und einfach ausgelegt werden. Die Stellvorrichtung ist allgemein bevorzugt über einen Aktuator antreibbar.

In einer weiteren bevorzugten Detailgestaltung umfasst die Stellvorrichtung eine Feder, wobei durch die Feder eine Rückstellkraft in Richtung einer in eine Endstellung der Stellvorrichtung ausübbar ist. Vorteilhaft ist die Feder dabei als Spiralfeder ausgebildet, und eine drehbare Welle der Stellvorrichtung ist innerhalb der Spiralfeder angeordnet. Auf diese Weise lässt sich raumsparend und effektiv eine hohe Rückstellkraft der Stellvorrichtung, zum Beispiel einer drehbaren Klappe, bereitstellen. Dies kann insbesondere dann gewünscht sein, wenn ein Aktuator der Stellvorrichtung seine Stellkraft hauptsächlich in nur einer Richtung aufbringt.

Besonders vorteilhaft weist die Feder eine Beschichtung, insbesondere aus einem Kunststoff, auf. Hierdurch kann eine Beeinträchtigung der Feder durch umherspritzendes Metall bzw. Schweißperlen, wie sie etwa bei der Herstellung der Vorrichtung entstehen, vermieden werden. Im allgemeinen wird die Stellvorrichtung im Zuge der Herstellung zunächst zwischen separaten Gehäuseteilen eingesetzt, wonach die Gehäuseteile dauerhaft miteinander verschweißt werden. Bei diesem Schweißvorgang befindet sich die Feder oft in exponierter Stellung und kann durch Schweißperlen blockiert bzw. beschädigt werden. Durch die Beschichtung der Feder kann dies vermieden werden. Zweckmäßig ist die Beschichtung dabei möglichst mit hohen Temperaturen belastbar, wozu die Beschichtung bevorzugt ein Polymer auf Basis eines fluorierten Kohlenwasserstoffs, insbesondere Polytetrafluorethylen (PTFE) umfasst. Solche gut gleitfähigen und hochtemperaturfesten Polymere sind zum Beispiel unter dem Handelsnamen Teflon^{®} bekannt.

Bei ausreichender Temperaturfestigkeit kann die Beschichtung auch nach der Herstellung während des Betriebs der Abgaskühlers vorhanden bleiben. Hierdurch kann der Reibwiderstand des zum Beispiel spiralig mit sich berührenden Windungen gewickelten Federdrahtes verringert werden und eine eventuelle Geräuschentwicklung wird vermieden. Zudem ist durch die Beschichtung ein guter Korrosionsschutz der Feder gegeben. Grundsätzlich kann die Beschichtung aber auch durch die Betriebstemperaturen zersetzt werden oder zum Beispiel durch Abdampfen entfernt werden.

In einer alternativen oder ergänzenden Ausführung ist eine die Feder zumindest teilweise überdeckende Hülse vorgesehen, durch die eine Schutzabdeckung gegen umherspritzende Metalltropfen im Zuge des Fertigungsprozesses ausgebildet ist.

Eine solcherart durch Beschichtung und/oder Hülse geschützte Feder einer Stellvorrichtung ist grundsätzlich mit jeder Bauart eines Abgaskühlers vorteilhaft kombinierbar und nicht auf die besondere Bauart der vorliegenden Vorrichtung beschränkt.

In bevorzugter Kombination mit den vorgenannten Merkmalen der Vorrichtung beträgt das Verhältnis einer Länge des Gehäuses in seiner Längsrichtung zu einem größten Durchmesser des Gehäuses weniger als 3,5, insbesondere weniger als etwa 3. Hierdurch ist eine besonders kompakte Bauweise erzielt, so dass die Vorrichtung universell einsetzbar ist.

Weitere Vorteile und Merkmale einer erfindungsgemäßen Vorrichtung ergeben sich aus dem nachfolgend beschriebenen Ausführungsbeispiel sowie aus den abhängigen Ansprüchen.

Vorteilhaft ist, dass die Vorrichtung ein Abgaskühler für einen Verbrennungsmotor eines Kraftfahrzeugs ist.

Vorteilhaft ist, dass das Gehäuse Anschlüsse zur Durchströmung mit einem flüssigen Kühlmittel aufweist.

Vorteilhaft ist, dass ein Abgaskanal vorgesehen ist, der in Längsrichtung und im Wesentlichen parallel zu den Rohren angeordnet ist.

Vorteilhaft ist, dass das weitere Umlenkmittel als ein gebogenes Blechteil ausgebildet ist.

Vorteilhaft ist, dass die Stellvorrichtung eine um eine Achse drehbare Klappe umfasst.

Vorteilhaft ist, dass ein maximaler Drehwinkel der Klappe nicht mehr als etwa 40 Grad, insbesondere nicht mehr als etwa 30 Grad beträgt.

Vorteilhaft ist, dass die Stellvorrichtung über einen Aktuator antreibbar ist.

Vorteilhaft ist, dass die Beschichtung ein Polymer auf Basis eines fluorierten Kohlenwasserstoffs, insbesondere Polytretrafluorethylen, umfasst.

Vorteilhaft ist, dass das Verhältnis einer Länge des Gehäuses in Längsrichtung zu einem größten Durchmesser des Gehäuses weniger als etwa 3,5 ist, insbesondere weniger als etwa 3.

Nachfolgend wird ein bevorzugtes Ausführungsbeispiel einer erfindungsgemäßen Vorrichtung beschrieben und anhand der anlegenden Zeichnungen näher erläutert.
- Fig. 1: zeigt eine räumliche Ansicht einer erfindungsgemäßen Vorrichtung mit Blick auf den Auslassbereich.
- Fig. 2: zeigt die Vorrichtung aus Fig. 1 mit Blick auf den Einlassbereich.
- Fig. 3: zeigt die Vorrichtung aus Fig. 1 in einer räumlichen Schnittansicht mit Blick auf den Auslassbereich.
- Fig. 4: zeigt eine räumliche Schnittansicht der Vorrichtung aus Fig. 3 mit Blick auf den Einlassbereich.
- Fig. 5: zeigt eine schematische Schnittansicht der Vorrichtung aus Fig. 1 bis Fig. 4.

Die Vorrichtung zur Kühlung eines Abgasstroms gemäß dem bevorzugten Ausführungsbeispiel findet Einsatz im Motorraum eines PKW. Sie hat ein Gehäuse 1, das als Längskörper mit im Wesentlichen rechteckigem Querschnitt ausgebildet ist. In seiner Längsrichtung sind an dem Gehäuse endseitig ein Einlassbereich 2 und gegenüberliegend endseitig ein Auslassbereich 3 angeordnet. Diese endseitigen Bereiche 2, 3, die auch als Diffusoren bezeichnet werden, bestehen jeweils aus Pressformteilen, die mit dem Gehäuse 1 verschweißt sind. In den Bereichen der Verbindung weist das Gehäuse 1 leicht vorspringende Verdickungen 1c auf.

Am Einlassbereich ist ein rechteckiger Flansch 2a durch Verschweißung angebracht, mittels dessen eine vom Verbrennungsmotor des PKW kommende Abgasleitung an der Vorrichtung anschließbar ist. Die auslassseitige Fortführung der Abgasleitung ist über einen am Auslassbereich 3 angeschweißten runden Flansch 3a herstellbar.

Das Gehäuse 1 umfasst zwei Anschlüsse 1a, 1b, über die das Wärmetauschergehäuse 1 auf an sich bekannte Weise mit einem flüssigen Kühlmittel durchströmbar ist.

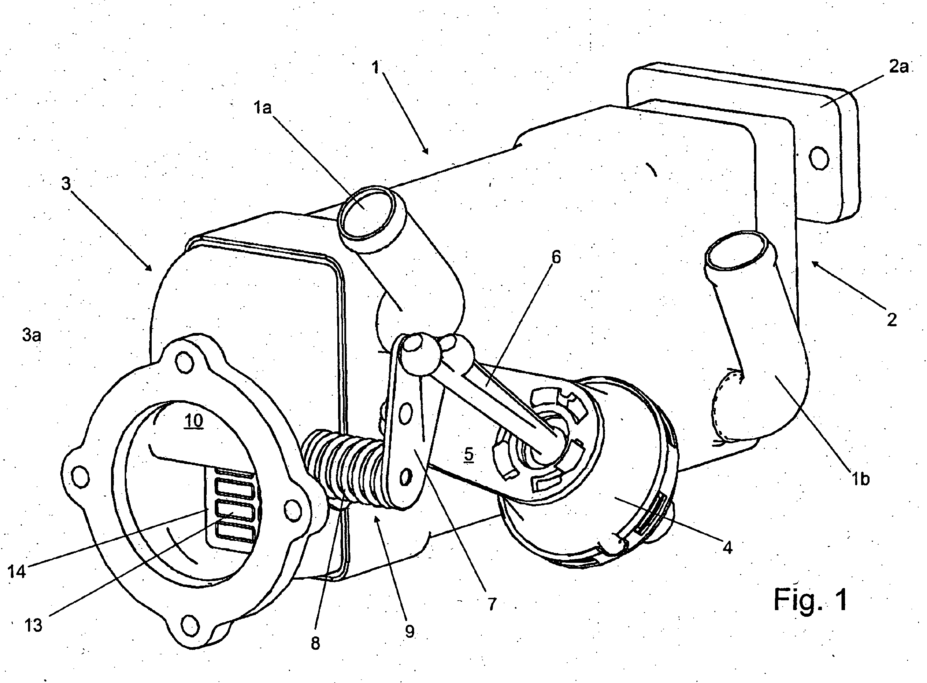

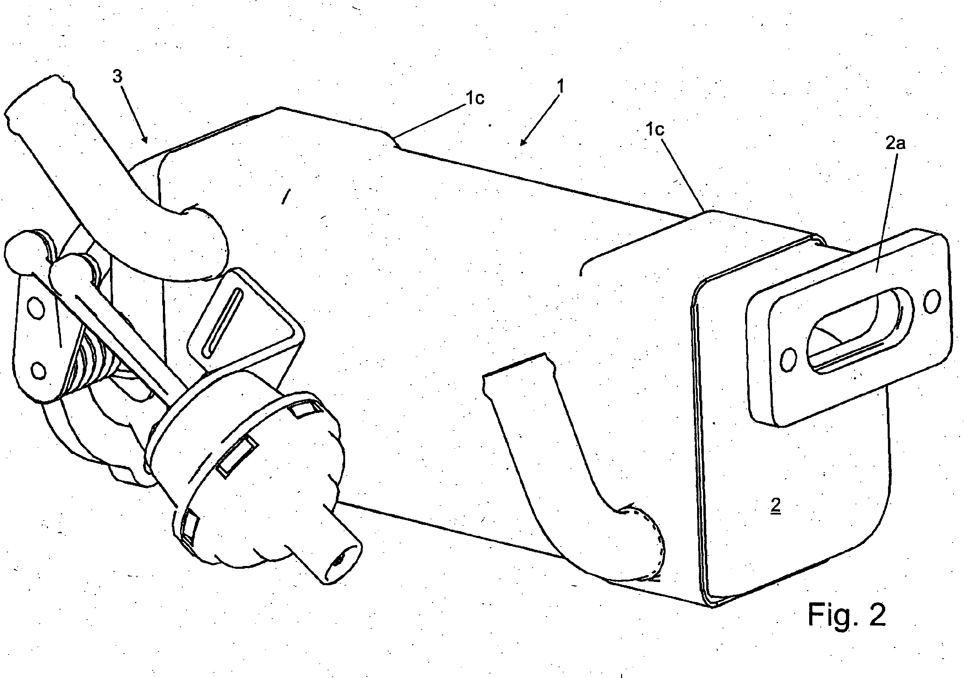

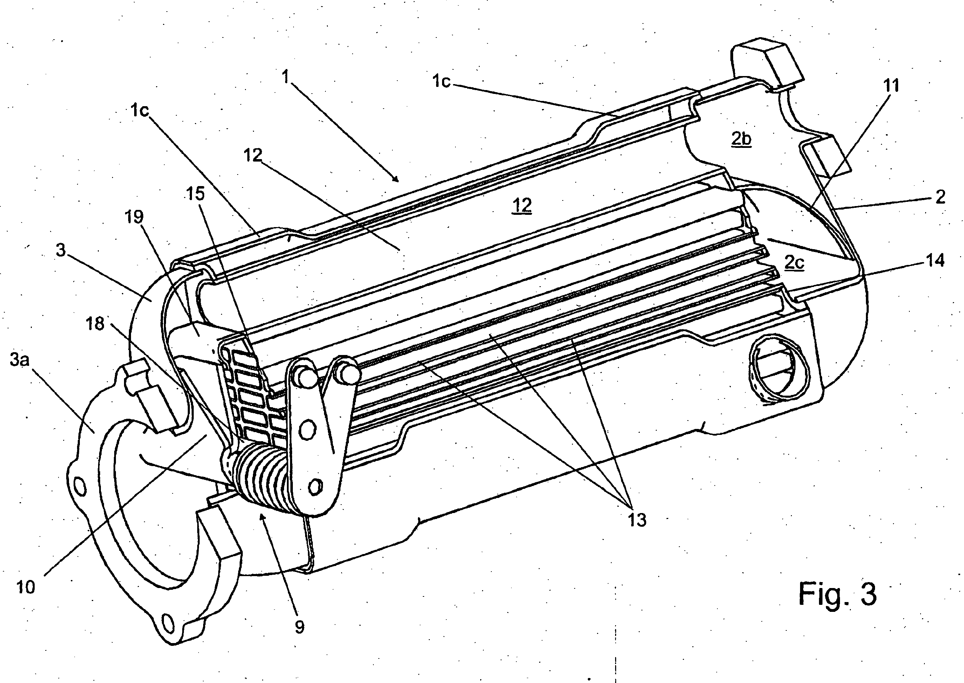

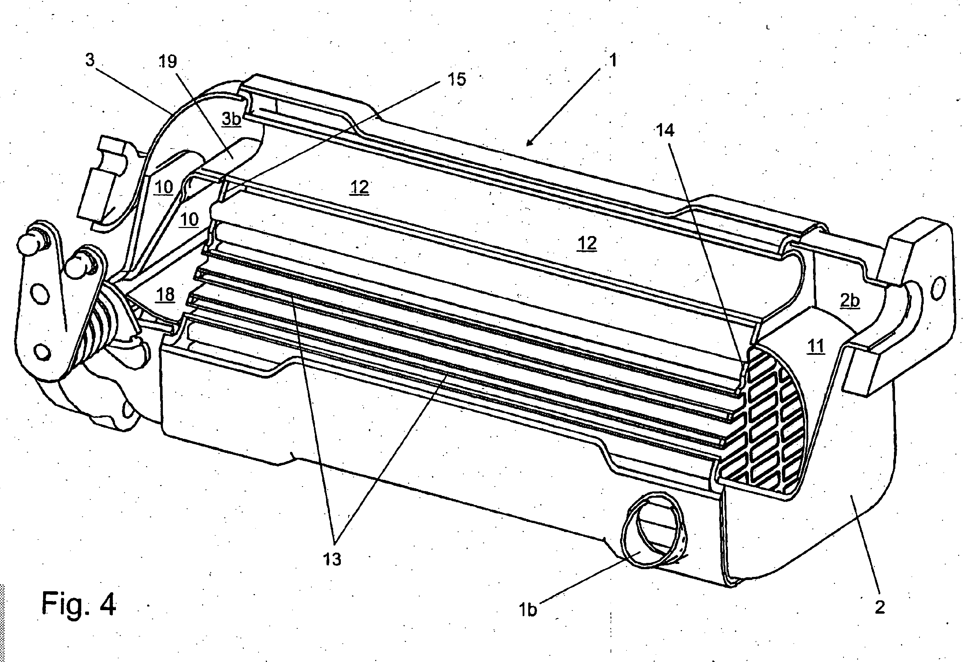

Ein als Druckdose ausgebildeter Aktuator 4 ist über ein Halteblech 5 an dem Gehäuse 1 festgelegt. Eine Hubstange 6 des Aktuators 4 treibt über einen Drehhebel 7 eine über eine Feder 8 mit einer Rückstellkraft belastete Drehwelle 9 an. Die Drehwelle 9 durchgreift die Wandung des Auslassbereichs 3 und ist im Innenraum des Auslassbereichs 3 fest mit einer Stellklappe 10 verbunden, so dass die Stellklappe 10 durch eine Drehung der Welle 9 verstellbar ist. In sämtlichen der Zeichnungen Fig. 1 bis Fig. 5 ist die zuvor geschilderte Antriebsmechanik und die Stellklappe 10 sowohl in einer ersten Endstellung als auch in einer zweiten Endstellung dargestellt. In der ersten Endstellung liegt die Klappe 10 mit ihrem Rand an der Wandung des Auslassbereichs 3 an und in der zweiten Endstellung an einem kleinen Führungsblech 19. Insgesamt wird durch den Aktuator 4, die Drehwelle 9 und die Klappe 10 eine Stellvorrichtung des Wärmetauschers ausgebildet.

Die Feder 8 ist als Spiralfeder aus einem gewickelten Federdraht ausgebildet, wobei die Wicklungen von der Drehwelle 9 durchgriffen werden. Die Enden der Federwicklung sind einenends gegen das Gehäuse und andernends gegen den Drehhebel 7 abgestützt, so dass die Drehwelle 9 durch die Feder in Richtung einer Endposition der Stellklappe kraftbeaufschlagt ist.

Der Federdraht ist über seine gesamte Länge mit PTFE (Polytetrafluorethylen, Teflon^{®})beschichtet. Bei der Herstellung des Abgaskühlers wird zunächst die Drehwelle 9 durch Feder 8 und Wandung des Auslassbereichs geschoben und festgelegt, wobei die Stellklappe 10 mit der Drehwelle verschweißt wird. Hierauf folgend werden noch weitere Schweißarbeiten durchgeführt, zum Beispiel das Anschweißen des Auslassbereichs 3 an das weitere Gehäuse 1. Bei diesen Schweißvorgängen des Fertigungsprozesses lagern sich durch umherspritzendes flüssiges Metall Schweißperlen in der Umgebung des unmittelbaren Schweißvorgangs ab. Durch die PTFE-Beschichtung wird ein Anhaften der Schweißperlen auf der Feder 8 verhindert. Zudem hat das PTFE eine so hohe Temperaturbeständigkeit, dass es sich auch im Normalbetrieb des Abgaskühlers nicht zersetzt oder gar Feuer fängt.

Das Innere der Vorrichtung ist wie folgt aufgebaut:
Der einlassseitige Flansch 2a mündet in einen Hohlraum 2b des Einlassbereichs 2. Der Einlassbereich 2 ist über ein erstes Umlenkmittel 11 in den genannten Hohlraum 2b und einen weiteren Hohlraum 2c unterteilt. Das Umlenkmittel 11 ist als gebogenes Blech ausgebildet, welches aus Gründen der einfachen Fertigung im Zuge einer Montage der Vorrichtung angeschweißt wird.

An den Hohlraum 2b schließt sich ein Abgaskanal 12 an, der das Gehäuse 1 in seiner Längsrichtung durchgreift. Der Abgaskanal 12 mündet in einen ersten Abschnitt 3b des Auslassbereichs 3. Der Abgaskanal 12 vermittelt dem Abgasstrom zwar grundsätzlich eine gewisse Kühlung, zumal seine Wandungen eine Wärmeleitfähigkeit aufweisen. Er ist jedoch nicht im Sinne einer Wärmetauschung mit dem flüssigen Kühlmittel ausgebildet, so dass eine Kühlung des Abgasstroms im Sinne der Erfindung nicht wesentlich im Abgaskanal 12 stattfindet.

Parallel zu dem Abgaskanal 12 ist eine Mehrzahl von Rohren 13 vorgesehen, die im vorliegenden Beispiel als Flachrohre mit rechteckigem Querschnitt ausgebildet sind. Die Mehrzahl von Rohren 13 und der als einzelnes Rohr mit erheblich größerem Querschnitt ausgebildete Abgaskanal 12 sind gemeinsam zwischen je einem endseitigem Kopfstück 14, 15 aufgenommen. Bei diesen Kopfstücken 14, 15 handelt es sich um starke Haltebleche mit entsprechenden Ausstanzungen zur Aufnahme der Rohrenden. Die Kopfstücke 14, 15 sind mit den Rohrenden und dem Gehäuse 1 sämtlich dicht verschweißt, so dass zwischen den Kopfstücken und einer Außenwandung des Gehäuses 1 ein zwischen den einzelnen Rohren verbleibender Hohlraum entsteht, der durch das Kühlmittel durchströmbar ist. Eine Umströmung des Abgaskanals 12 kann dabei je nach gewünschter Kühlleistung des Abgaskanals 12 durch weitere Maßnahmen vermieden sein. Die Rohre 13 werden im Betrieb von dem Kühlmittel umströmt und stellen somit Tauschermittel zur Wärmetauschung für das Abgas dar.

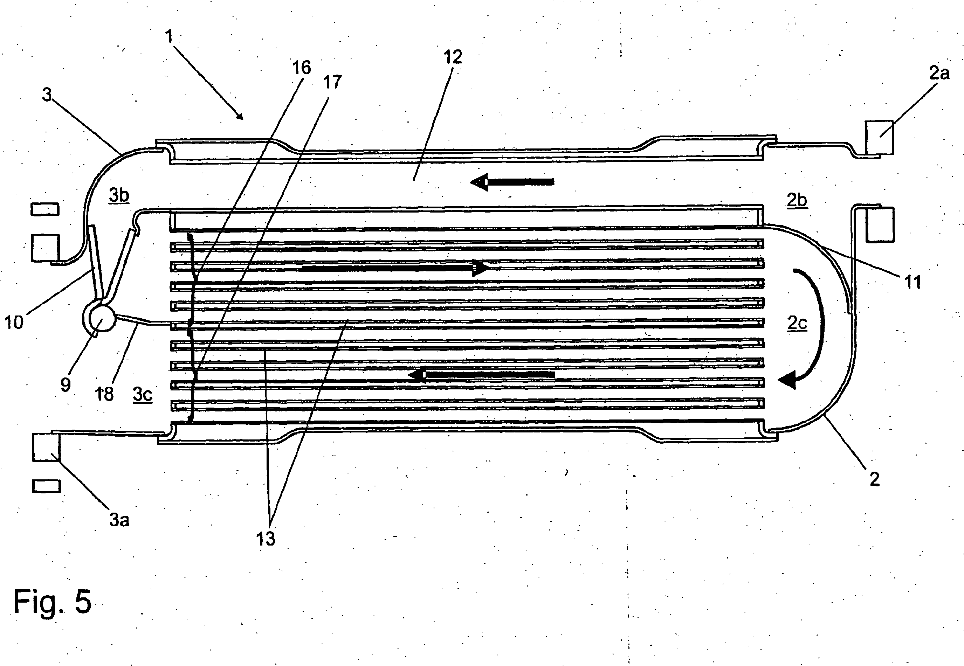

Im Fall der vorliegenden Erfindung ist die Mehrzahl von Rohren 13 in eine erste Gruppe und eine zweite Gruppe von Rohren 13 unterteilt. Dabei ist die erste Gruppe von Rohren einem ersten Strömungspfad 16 und die zweite Gruppe von Rohren einem zweiten Strömungspfad 17 zugeordnet (siehe Andeutung der Strömungspfade durch Pfeile in Fig. 5).

Die Aufteilung des Bündels von Rohren 13 in zwei Strömungspfade 16, 17 erfolgt durch ein im Auslassbereich 3 angeordnetes erstes Umlenkmittel 18. Das Umlenkmittel 18 ist als Strömungsblech zwischen dem Kopfstück 15 und der Welle 9 der Stellklappe 10 angeordnet. Das Umlenkmittel 18 trennt den ersten Raum 3b des Auslassbereichs 3 von einem zweiten Raum 3c. Der erste Raum 3b befindet sich am Eintritt des ersten Strömungspfades 16 und der zweite Raum 3c befindet sich am Austritt des zweiten Strömungspfades 17.

Die Funktion der erfindungsgemäßen Vorrichtung ist besonders gut aus der Darstellung gemäß Fig. 5 ersichtlich:
Die Klappe 10 ist zwischen zwei Endstellungen, die aus Gründen der besseren Darstellung beide eingezeichnet sind, um etwa 25 Grad hinsichtlich eines Drehwinkels der Welle 9 bewegbar. Der gemäß Fig. 5 linke Anschlag der Klappe 10 entspricht einer ersten Endstellung. In jedem Fall wird der Abgasstrom zunächst nach Eintritt durch den Flansch 2a und Durchströmung des Raums 2b durch den Abgaskanal 12 geleitet, in dem er jedoch keine oder nur eine geringe Kühlung erfährt. Nachdem der Abgasstrom in den Raum 3b eingetreten ist, ergeben sich je nach Stellung der Klappe 10 verschiedene Möglichkeiten der weiteren Abgasstromführung. Im Fall der ersten Endstellung (linker Anschlag) wird der Abgasstrom von dem Raum 3b in die erste Gruppe von Rohren bzw. den ersten Strömungspfad 16 geleitet. Auf diesem ersten Strömungspfad durchläuft der Abgasstrom das Gehause 1 in Längsrichtung in zu dem Abgaskanal 12 entgegengesetzter Richtung (siehe Pfeile in Fig. 5). Am Ende des ersten Strömungspfades tritt der Abgasstrom in den Raum 2c des ersten Eintrittsbereichs ein, wo er um etwa 180 Grad umgelenkt wird. Hiernach tritt er in das andere Bündel von Rohren bzw. den zweiten Strömungspfad 17 ein, auf dem er die Längsrichtung des Gehäuses 1 wiederum in Gegenrichtung durchläuft Nach Verlassen des Strömungspfades 17 tritt der Abgasstrom in den Raum 3c ein und hiernach in den Auslassflansch 10. Im Falle dieser ersten Endstellung der Klappe 10 durchläuft der Abgasstrom die Wärmetauschermittel 13 somit auf einem U-förmigen Weg, so dass die gesamte Strömungslänge entlang der Oberflächen der gekühlten Rohre 13 etwa der zweifachen Länge des Gehäuses 1 entspricht.

Im Falle der zweiten Endstellung, die dem rechten Anschlag der Klappe 10 in Fig. 5 entspricht, wird der Abgasstrom nach Durchströmung des Raumes 3b dem Auslassflansch 10 unmittelbar zugeführt, ohne dass der Abgasstrom die Tauschermittel bzw. gekühlten Rohre 13 durchströmt. In dieser Betriebsart hat der Abgaskanal 12 eine zu an sich bekannten Bypasskanälen von nur einfach durchströmten Wärmetauschern analoge Funktion. Im Falle der ersten Endstellung, bei der eine Kühlung des Abgasstroms erfolgt, hat der Abgaskanal 12 nicht die Funktion eines Bypasskanals, sondern die Funktion einer Zuleitung zu den Tauschermitteln 13.

Durch diese Anordnung ist ein Wärmetauscher bereitgestellt, der eine sehr kompakte Bauform aufweist und zugleich an seinem einen Ende einen Einlassbereich und an seinem anderen, gegenüberliegenden Ende einen Auslassbereich hat. Wie den maßstabsgerechten Zeichnungen zu entnehmen ist, beträgt dabei die Länge des Gehäuses 1 inklusive der Einlass- und Auslassbereiche 2,3 weniger als das Dreifache eines maximalen Gehäusedurchmessers in zu der Längsrichtung senkrechter Richtung. Hierbei wurden die Maße und Überstände der Flansche 2a, 3a nicht berücksichtigt. Die Flansche können auf einfache Weise auch kleinbauender gestaltet werden, etwa durch unmittelbare Verschweißung der zuleitenden und ableitenden Abgasrohre mit der Wärmetauschervorrichtung. Insbesondere der relativ kleine Stellwinkel der Klappe 10 zwischen den beiden Endstellungen trägt zu der kompakten Bauweise der Vorrichtung bei.

## Patentansprüche

1. Vorrichtung zur Abgaskühlung, umfassend
einen Einlassbereich (2) zur Zuführung eines Abgasstroms,
einen Auslassbereich (3) zur Abführung des gegebenenfalls gekühlten Abgases, und
ein Gehäuse (1) mit einer Längsrichtung zur Aufnahme von Tauschermitteln (13) zur Wärmetauschung, wobei der Abgasstrom die Tauschermittel (13) auf einem Weg vom Einlassbereich zum Auslassbereich durchströmt,
wobei der Einlassbereich (2) und der Auslassbereich (3) jeweils an bezüglich der Längsrichtung entgegengesetzten Endbereichen des Gehäuses (1) angeordnet sind,
wobei der Abgasstrom die Tauschermittel (13) auf einem ersten Strömungspfad (16) als auch auf einem hierzu entgegengesetzten zweiten Strömungspfad (17) durchläuft, **dadurch gekennzeichnet, dass** am Ende des ersten Strömungspfads der Abgasstrom in einen Raum (2c) des Einlassbereichs (2) eintritt, wo er um etwa 180 Grad umgelenkt wird.

2. Vorrichtung nach Anspruch 1, **dadurch gekennzeichnet, dass** die Tauschermittel eine Mehrzahl von sich in der Längsrichtung erstreckenden Rohren (13) zur Abgasführung umfassen, die in dem Gehäuse (1) angeordnet sind

3. Vorrichtung nach Anspruch 2, **dadurch gekennzeichnet, dass** die Rohre (13) in ihren Endbereichen jeweils in gemeinsamen Kopfstucken (14, 15) festgelegt sind

4. Vorrichtung nach einem der Anspruche 2 oder 3, **dadurch gekennzeichnet, dass** eine erste Gruppe der Rohre (13) dem ersten Strömungspfad (16) zugeordnet ist und dass eine zweite Gruppe von Rohren (13) dem zweiten Strömungspfad (17) zugeordnet ist.

5. Vorrichtung nach Anspruch 1, **dadurch gekennzeichnet, dass** der Abgaskanal (12) unmittelbar mit dem Einlassbereich (2) verbunden ist

6. Vorrichtung nach Anspruch 5, **dadurch gekennzeichnet, dass** die Vorrichtung ein Umlenkmittel (18) zur Umlenkung des Abgasstroms von dem Abgaskanal (12) in den ersten Strömungspfad umfasst.

7. Vorrichtung nach Anspruch 6, **dadurch gekennzeichnet, dass** die Vorrichtung ein weiteres Umlenkmittel (11) zur Umlenkung des Abgasstroms von dem ersten Strömungspfad (16) in den zweiten Strömungspfad (17) umfasst.

8. Vorrichtung nach einem der vorhergehenden Ansprüche, **dadurch gekennzeichnet, dass** die Vorrichtung eine Stellvorrichtung (4, 9, 10) zur selektiven Führung des Abgasstroms umfasst.

9. Vorrichtung nach Anspruch 8, **dadurch gekennzeichnet, dass** die Stellvorrichtung (4, 9, 10) in einer ersten Endstellung den Abgasstrom in den ersten Strömungspfad (16) leitet, und in einer zweiten Endstellung in eine Auslassoffnung (3a) leitet.

10. Vorrichtung nach Anspruch 9, **dadurch gekennzeichnet, dass** der Abgasstrom in der zweiten Endstellung nicht durch die Tauschermittel (13) beführt ist, so dass eine Kühlung des Abgasstroms in der zweiten Endstellung im Wesentlichen vermieden ist,

11. Vorrichtung nach einem der Ansprüche 1 bis 10, **dadurch gekennzeichnet, dass** die Stellvorrichtung (4, 9, 10) eine Feder (8) umfasst, wobei durch die Feder (8) eine Rückstellkraft in Richtung einer in eine Endstellung der Stellvorrichtung (4, 9, 10) ausübbar ist.

12. Vorrichtung nach Anspruch 11, **dadurch gekennzeichnet, dass** die Feder (8) als Spiralfederausgebildet ist.

13. Vorrichtung nach Anspruch 12, **dadurch gekennzeichnet, dass** eine drehbare Welle (9) der Stellvorrichtung (4, 9, 10) innerhalb der Spiralfeder (8) angeordnet ist.

14. Vorrichtung nach einem der Ansprüche 11 bis 13, **dadurch** gekennzeichnen, dass die Feder (8) eine Beschichtung, insbesondere aus einem Kunststoff, aufweist.

15. Vorrichtung nach einem der Ansprüche 11 bis 13, **dadurch gekennzeichnet, dass** die Feder (8) innerhalb einer die Feder (8) überdeckenden Hülse angeordnet ist.

## Claims

1. A device for cooling waste gas, comprising an inlet region (2) for supplying a flow of waste gas, an outlet region (3) for discharging the optionally cooled waste gas, and a longitudinal housing (1) for receiving exchanger means (13) for exchanging heat, the flow of waste gas flowing through the exchanger means (13) on a route from the inlet region to the outlet region, the inlet region (2) and the outlet region (3) each being arranged at end regions of the housing (1) which are opposite in relation to the longitudinal direction, the flow of waste gas flowing through the exchanger means (13) on a first flow path (16) and also on a second flow path (17) which is counter thereto, **characterized in that** the flow of waste gas enters a space (2c) of the inlet region (2) at the end of the first flow path, where it is deflected through approximately 180 degrees.

2. The device as claimed in claim 1, **characterized in that** the exchanger means comprise a plurality of tubes (13) for guiding waste gas which extend in the longitudinal direction and are arranged in the housing (1).

3. The device as claimed in claim 2, **characterized in that** the tubes (13) are each secured in their end regions in common head pieces (14, 15).

4. The device as claimed in one of claims 2 or 3, **characterized in that** a first group of the tubes (13) is associated with the first flow path (16) and **in that** a second group of tubes (13) is associated with the second flow path (17).

5. The device as claimed in claim 1, **characterized in that** the waste gas channel (12) is connected directly to the inlet region (2).

6. The device as claimed in claim 5, **characterized in that** the device comprises a deflection means (18) for deflecting the flow of waste gas from the waste gas channel (12) into the first flow path.

7. The device as claimed in claim 6, **characterized in that** the device comprises a further deflection means (11) for deflecting the flow of waste gas from the first flow path (16) into the second flow path (17).

8. The device as claimed in one of the preceding claims, **characterized in that** the device comprises an adjustment device (4, 9, 10) for selectively guiding the flow of waste gas.

9. The device as claimed in claim 8, **characterized in that** the adjustment device (4, 9, 10) in a first end position leads the flow of waste gas into the first flow path (16) and in a second end position leads it into an outlet opening (3a).

10. The device as claimed in claim 9, **characterized in that** the flow of waste gas in the second end position is not guided by the exchanger means (13), so that cooling of the flow of waste gas is substantially avoided in the second end position.

11. The device as claimed in one of claims 1 to 10, **characterized in that** the adjustment device (4, 9, 10) comprises a spring (8), the spring (8) allowing a restoring force to be exerted in the direction of an end position of the adjustment device (4, 9, 10).

12. The device as claimed in claim 11, **characterized in that** the spring (8) is configured as a coil spring.

13. The device as claimed in claim 12, **characterized in that** a rotatable shaft (9) of the adjustment device (4, 9, 10) is arranged within the coil spring (8).

14. The device as claimed in one of claims 11 to 13, **characterized in that** the spring (8) has a coating, in particular made of a plastics material.

15. The device as claimed in one of claims 11 to 13, **characterized in that** the spring (8) is arranged within a sleeve covering the spring (8).

## Revendications

1. Dispositif servant au refroidissement de gaz d'échappement, comprenant une zone d'entrée (2) pour l'alimentation d'un flux de gaz d'échappement, une zone de sortie (3) pour l'évacuation des gaz d'échappement éventuellement refroidis, et un carter (1) configuré dans le sens de la longueur pour loger des moyens échangeurs (13) servant à l'échange de chaleur, où le flux de gaz d'échappement traverse les moyens échangeurs (13) sur une trajectoire partant de la zone d'entrée et allant jusqu'à la zone de sortie, où la zone d'entrée (2) et la zone de sortie (3) sont disposées respectivement sur des zones d'extrémité du carter (1) configurées en sens opposés par rapport à la direction longitudinale, où le flux de gaz d'échappement traverse les moyens échangeurs (13) aussi bien sur une première trajectoire d'écoulement (16) que sur une deuxième trajectoire d'écoulement (17) disposée en sens opposé par rapport à ladite première trajectoire d'écoulement, **caractérisé en ce que** le flux de gaz d'échappement, à la fin de la première trajectoire d'écoulement, entre dans un espace (2c) de la zone d'entrée (2), où le flux de gaz d'échappement est redirigé suivant un angle à peu près égal à 180 degrés.

2. Dispositif selon la revendication 1, **caractérisé en ce que** les moyens échangeurs comprennent une pluralité de tubes (13) servant au guidage des gaz d'échappement et s'étendant intrinsèquement dans le sens de la longueur, lesquels tubes sont disposés dans le carter (1).

3. Dispositif selon la revendication 2, **caractérisé en ce que** les tubes (13) sont fixés, dans leurs zones d'extrémités, à chaque fois dans des pièces de tête communes (14, 15).

4. Dispositif selon l'une des revendications 2 ou 3, **caractérisé en ce qu'**un premier groupe de tubes (13) est associé à la première trajectoire d'écoulement (16) et **en ce qu'**un deuxième groupe de tubes (13) est associé à la deuxième trajectoire d'écoulement (17).

5. Dispositif selon la revendication 1, **caractérisé en ce que** le conduit de gaz d'échappement (12) est relié directement à la zone d'entrée (2).

6. Dispositif selon la revendication 5, **caractérisé en ce que** le dispositif comprend un moyen de retour de flux (18) servant à rediriger dans la première trajectoire d'écoulement, le flux de gaz d'échappement provenant du conduit de gaz d'échappement (12).

7. Dispositif selon la revendication 6, **caractérisé en ce que** le dispositif comprend un autre moyen de retour de flux (11) servant à rediriger dans la deuxième trajectoire d'écoulement (17), le flux de gaz d'échappement provenant de la première trajectoire d'écoulement (16).

8. Dispositif selon l'une quelconque des revendications précédentes, **caractérisé en ce que** le dispositif comprend un dispositif de réglage (4, 9, 10) servant au guidage sélectif du flux de gaz d'échappement.

9. Dispositif selon la revendication 8, **caractérisé en ce que** le dispositif de réglage (4, 9, 10), dans une première position de fin de course, dirige le flux de gaz d'échappement dans la première trajectoire d'écoulement (16) et, dans une deuxième position de fin de course, dirige ledit flux de gaz d'échappement dans une ouverture de sortie (3a).

10. Dispositif selon la revendication 9, **caractérisé en ce que** le flux de gaz d'échappement, dans la deuxième position de fin de course, n'est pas guidé par les moyens échangeurs (13), de sorte qu'un refroidissement des gaz d'échappement, dans la deuxième position de fin de course, est pratiquement évité.

11. Dispositif selon l'une quelconque des revendications 1 à 10, **caractérisé en ce que** le dispositif de réglage (4, 9, 10) comprend un ressort (8), où une force de rappel peut être exercée par le ressort (8), en direction d'une position de fin de course du dispositif de réglage (4, 9, 10).

12. Dispositif selon la revendication 11, **caractérisé en ce que** le ressort (8) est configuré comme un ressort en spirale.

13. Dispositif selon la revendication 12, **caractérisé en ce qu'**un arbre rotatif (9) du dispositif de réglage (4, 9, 10) est disposé à l'intérieur du ressort en spirale (8).

14. Dispositif selon l'une quelconque des revendications 11 à 13, **caractérisé en ce que** le ressort (8) présente un revêtement, en particulier composé d'une matière plastique.

15. Dispositif selon l'une quelconque des revendications 11 à 13, **caractérisé en ce que** le ressort (8) est dispose à l'intérieur d'un manchon recouvrant le ressort (8).
